**Europäisches Patentamt**

**European Patent Office**

**Office européen des brevets**

(19)

(11) Veröffentlichungsnummer : **0 024 600**
**B1**

(12) **EUROPÄISCHE PATENTSCHRIFT**

(45) Veröffentlichungstag der Patentschrift :
**26.10.83**

(21) Anmeldenummer : **80104678.0**

(22) Anmeldetag : **08.08.80**

(51) Int. Cl.³ : **C 08 J 5/18, C 08 L 69/00,**
**A 61 M 1/03, B 01 D 13/04**

(54) **Polycarbonat-Polyäther-Copolymermembran, Verfahren zu deren Herstellung und Verwendung derselben.**

(30) Priorität : **13.08.79 DE 2932761**

(43) Veröffentlichungstag der Anmeldung :
**11.03.81 Patentblatt 81/10**

(45) Bekanntmachung des Hinweises auf die Patenterteilung : **26.10.83 Patentblatt 83/43**

(84) Benannte Vertragsstaaten :
**AT BE CH DE FR GB IT LI LU NL SE**

(56) Entgegenhaltungen :
**DE B 1 162 559**
**US A 4 160 791**

(73) Patentinhaber : **Akzo GmbH**
**Postfach 10 01 49 Kasinostrasse 19-23**
**D-5600 Wuppertal-1 (DE)**

(72) Erfinder : **Behnke, Joachim, Dr.Dipl.-Ing.**
**In den Weizenäckern 26**
**D-8762 Amorbach (DE)**
Erfinder : **Pitowski, Hans-Jürgen**
**Rainlein 15**
**D-8760 Miltenberg (DE)**

EP 0 024 600 B1

Jouve, 18, rue St-Denis, 75001 Paris, France

## Polycarbonat-Polyäther-Copolymermembran, Verfahren zu deren Herstellung und Verwendung derselben

Die Erfindung betrifft eine Membran in Form einer Fachfolie, Schlauchfolie oder eines Hohlfadens aus einem Polycarbonat-Polyäther-Blockcopolymeren mit 5 bis 35 Gew.-% wiederkehrenden Alkylenäthercarbonateinheiten und 95 bis 65 Gew.-% wiederkehrenden Bisphenol-A-Carbonateinheiten.

Derartige Membranen sind bereits bekannt. So beschreibt die DE-OS 27 13 283 eine solche Polyäther-Polyäther-Blockcopolymermembran, deren Eigenschaften im wesentlichen darauf gerichtet sind, daß sie bei geringer Ultrafiltrationsrate eine relativ hohe dialytische Permeabilität für Vitamin B 12 aufweisen. Die aus den angegebenen Molekulargewichten sich ergebenden Intrinsic-Viskositäten liegen unter 170 ml/g und für die Ultrafiltrationsrate sollen Werte eingehalten werden, die unterhalb von 4 ml/h · m² · mm Hg liegen. Die mechanischen Eigenschaften solcher Membranen sind nur wenig befriedigend.

In jüngerer Zeit hat sich die Hämofiltration als Behandlungsmethode für die unter Bluthochdruck leidenden Dialysepatienten eingeführt. Zur Reinfusion von größeren Flüssigkeitsmengen in den menschlichen Blutkreislauf benötigt man für die Dialysebehandlung Membranen, die eine hohe hydraulische Permeabilität besitzen.

Hergestellt wurden Membranen aus Polycarbonat-Polyäther-Copolymeren bisher (vgl. beispielsweise US-PS 4 048 271 und DE-OS 27 11 498) durch Aufrakeln einer verdünnten Polymerlösung, die eine Substanz für die Ausbildung der Poren enthielt, auf eine Oberfläche und anschließendes teilweises Verdampfen des Lösungsmittels. Nach dem teilweisen Verdampfen des Lösungsmittels wurden die Membranen in einem Wasserbad geliert. Nach dem Waschen wurden die Membranen in einem Kunststoffbeutel oder einem anderen Behälter, der Wasser und ein Sterilisierungsmittel enthielt (z. B. Formaldehyd), gelagert.

Aus der US-PS 4 160 791 sind Membranen aus Polycarbonat-Polyätherblockcopolymeren, die nach dem Phaseninversionsverfahren gebildet wurden und dementsprechend asymmetrische Membranen sind, bekannt. Asymmetrische Membranen besitzen aufgrund ihrer Bildung eine Haut. Die dialytischen Eigenschaften zeigen, daß die Vitamin-B12 Permeabilität mit der Ultrafiltrationsrate erheblich ansteigt.

Die in der US-PS 4 160 791 beschriebene Membran wird keiner Trocknung unterzogen, sondern wird unter Zusatz von Formaldehyd in einem verschweißten Polyäthylenbeutel gelagert.

Aus der DE-AS 11 62 559 ist die Verwendung von Polycarbonat-Polyäthercopolymeren zu Folien Fäden und Fasern bekannt. Die Folien sollen dabei aus Lösungen vergossen werden. Gießfolien haben aber im allgemeinen keine Membraneigenschaften, wenn nicht besondere Maßnahmen beim Gießen eingehalten werden.

Der vorliegenden Erfindung lag die Aufgabe zugrunde, Membranen in Form einer Flachfolie, Schlauchfolie oder eines Hohlfadens aus einem Polycarbonat-Polyäther-Blockcopolymeren mit 5 bis 35 Gew.% wiederkehrenden Alkylenäthercarbonateinheiten in Polyäthylenoxidblöcken mit einem mittleren Molekulargewicht von mehr als 1 000 und 95 bis 65 Gew.% wiederkehrenden Bisphenol-A-Carbonateinheiten zu schaffen, die eine hohe Ultrafiltrationsleistung besitzen und solche mechanischen Eigenschaften aufweisen, daß sie in trockenem Zustand lagerfähig und handhabbar sind. Weiterhin bestand die Aufgabe der Erfindung darin, in einem technoligisch vereinfachten Verfahren unmittelbar solche Membranen herzustellen.

Gelöst wird diese Aufgabe durch eine Membran, die dadurch gekennzeichnet ist, daß das mittlere Molekulargewicht der Polyäthylenoxidblöcke 1 000 bis 20 000 beträgt, die Struktur der Membran isotrop und hautfrei ausgebildet ist ; die Intrinsic-Viskosität des Copolymeren 180 bis 300 ml/g (gemessen in Chloroform bei 25 °C) und die Ultrafiltrationsrate 4 bis 200 ml/h · m² · mm Hg betragen ; und hergestellt ist durch Extrusion einer Lösung des Polycarbonat-Polyäther-Blockcopolymeren in γ-Butyrolacton in einen Nichtlöser.

Die Ultrafiltrationsrate der Membranen wird bestimmt durch Messung des Flüssigkeitsvolumens, das bei gegebener Druckdifferenz bei einer Temperatur von 20 °C durch eine mit der Apparatur festgelegte Membranfläche durch die Membrane hindurchtritt und das zur allgemeinen Vergleichbarkeit auf Flächeneinheit, Zeiteinheit und Druckeinheit normiert wird. Als Flüssigkeit wird Wasser verwandt. Die Methode ist beschrieben in « Evaluation of Hemodialyzers and Dialysis Membranes » des U.S. Department of Health, Education and Welfare, DHEW Publication No (NIH) 77-1294, S. 24-26.

Vorzugsweise beträgt zahlenmäßig die dialytische Permeabilität für Vitamin B12 (gemessen bei 20 °C) der erfindungsgemäßen Membran in Abhängigkeit von der Ultrafiltrationsleistung jeweils $DL_{B12} = (2,5 + 0,25) \sqrt{UFL}$. Die Ultrafiltrationsleistung hat die Dimension ml/min. kp. Die Ultrafiltrationsleistung ergibt sich aus der Ultrafiltrationsrate in ml/h · m² · mm Hg durch Division durch den Faktor 815, d. h. einer UFR von beispielsweise 4 ml/h · m² · mm Hg entspricht eine UFL von $4,9 \cdot 10^{-3}$ ml/min kp. Der formelmäßig angegebene Zusammenhang zwischen UFL und dialytischer Permeabilität für Vitamin B 12 ($DL_{B12}$) gilt nur zahlenmäßig und nicht in den Dimensionen. Er wurde durch Regression ermittelt.

Die dialytische Permeabilität ist bei Dialysemembranen ein Maßstab für die Durchlässigkeit der Membranen für gelöste Stoffe und ist außer von der Membran vom Molekulargewicht der gelösten Stoffe abhängig. Als Testsubstanz für die Urämiegifte im Bereich eines mittleren Molekulargewichtes von 500-3 000 wird zur Beurteilung der Eignung einer Membran eine Lösung von 100 mg/l Vitamin B 12 zur Bestimmung der Mittelmoleküldurchlässigkeit verwendet. Gemessen wird die diffusive, drucklose Konzentrationsänderung zweier unterschiedlich konzentrierter Ausgangslösungen zu beiden Seiten der Membran mit der Zeit. Die Mittelmoleküldurchlässigkeit errechnet sich dann nach folgender Gleichung bei Anwendung einer Vitamin B 12-Lösung.

Mittelmoleküldurchlässigkeit = $\ln\Delta C_1/\Delta C_2/A(1/Va + 1/Vb) (t_2-t_1)$

$\Delta C_i$ = gemessene Konzentrationsdifferenz zwischen beiden Membranseiten zur Zeit $t_i$

A = Membranfläche

Va + Vb = Volumen beider Kammern, die durch die Membran getrennt sind.

Die Methode is ebenfalls beschrieben in « Evaluation of Hemodialyzers and Dialysis Membranes » des U.S. Department of Health, Education and Welfare, DHEW Publication N° (NIH) 77-1294, S. 14 und 15, für die Messung bei Flach- und Schlauchmembranen und S. 20 für die Messung von Hohlfäden.

Eine besondere Ausführungsform der Erfindung ist dadurch gekennzeichnet, daß das Polycarbonat-Polyäther-Copolymere aus 7 bis 13 Gew.-% wiederkehrenden Polyäthylenoxidcarbonateinheiten und 93 bis 87 Gew.-% wiederkehrenden Bisphenol-A-Carbonateinheiten aufgebaut ist und das mittlere Molekulargewicht der Polyäthylenoxidblöcke 6 000 bis 10 000 beträgt. Unter dem mittleren Molekulargewicht wird das Gewichtsmittel verstanden.

Eine solche Membran läßt sich vorteilhaft ohne jegliche Nachbehandlungsmittel wie beispielsweise Glyzerin trocknen, ohne daß dann die Struktur der Membran zusammenfällt. Sie ist dadurch gekennzeichnet, daß ihr Gehalt an Hilfs- und Femdstoffen weniger als 0,5 Gew.-% beträgt.

Bei solchen Membranen läßt sich die Struktur in vorteilhafter Weise dahingehend beeinflussen, daß diese eine noch höhere Ultrafiltrationsrate im Verhältnis zur Vitamin-B12-Permeabilität aufweisen. Vorzugsweise beträgt zahlenmäßig die dialytische Permeabilität für Vitamin B 12 (gemessen bei 20 °C) bei einer solchen Membran in Abhängigkeit von der Ultrafiltrationsleistung jeweils $DL_{B12} = (1,3 \pm 0,2)$ UFL.

Gelöst wird die Aufgabe ferner erfindungsgemäß durch ein Verfahren zur Herstellung einer Membran in Form einer Flachfolie, Schlauchfolie oder eines Hohlfadens, das dadurch gekennzeichnet ist, daß man bei einer Temperatur von 80 bis 120 °C in einer ersten Lösestufe ein Polycarbonat-Polyätherblockcopolymeres mit γ-Butyrolactam homogen vermischt, anschließend in einer zweiten Lösestufe bei 140 bis 180 °C in weniger als 10 Minuten in eine echte Lösung überführt und nach Filtration auf 20 bis 50 °C abkühlt, daß man diese Lösung durch eine Düse in ein Bad, das einen Nichtlöser für das Polymere enthält, zu einer Schlauchfolie, Flachfolie oder einem Hohlfaden extrudiert und mit Hilfe von Wasch- und Behandlungsbädern diese bis zur Nachweisgrenze lösungsmittelfrei wäscht und unter Schrumpfbehinderung in den Längs- und Querabmessungen trocknet.

Für Flachfolien und Schlauchfolien werden übliche Schlitz- und Ringdüsen verwendet, wie man sie beispielsweise von der Flach- und Schlauchfolienherstellung nach dem Cuoxamverfahren kennt. Für Hohlfäden werden übliche Hohlfadendüsen verwendet, wie sie beispielsweise in der DE-PS 736 721 beschrieben sind. Als hohlraumbildende Flüssigkeit hat sich insbesondere Butylstearat bewährt. Andere inerte Flüssigkeiten sind in gleicher Weise brauchbar. Die Düsen tauchen im allgemeinen in das Bad, das den Nichtlöser enthält ein. Es ist aber auch möglich, die Polymerlösung zunächst eine Luftstrecke durchlaufen zu lassen, um beispielsweise mit größeren Düsenabmessungen arbeiten zu können.

Während Gießfolien häufig aus verdünnteren Polymerlösungen durch teilweises Verdampfen des Lösungsmittels gebildet werden, wird beim erfindungsgemäßen Verfahren mit relativ konzentrierten Lösungen gearbeitet. Vorzugsweise werden in der ersten Lösestufe Polycarbonat-Polyäther-Blockcopolymere und γ-Butyrolacton im Gewichtsverhältnis 10 : 90 bis 20 : 80 gemischt.

Durch die Verwendung von γ-Butyrolacton als Lösungsmittel und die Fällung in einen Nichtlöser gelingt es überraschenderweise, zu porösen Membranen zu kommen, die hervorragende mechanische Eigenschaften bei guten Dialyse- und Ultrafiltrationsleistungen aufweisen, ohne daß zunächst irgendwelche Hilfsstoffe benötigt werden, die die Struktur bewirken. Durch die Verfahrensbedingungen läßt sich die Struktur in einem weiten Rahmen in gewünschter Weise einstellen.

Ein ausreichend schneller Übergang des γ-Butyrolacton-Polycarbonat-Polyäther-Copolymer-Gemisches in eine homogene, gelartige Mischung wird erreicht, wenn in bevorzugter Weise die Temperatur in der ersten Lösestufe 100 bis 110 °C beträgt.

Die Temperatur in der zweiten Lösestufe sollte 180 °C nicht übersteigen, weil sonst die Gefahr einer thermischen Schädigung des Copolymeren besteht, die zu nachteiligen Membraneigenschaften führt. Der in dieser Lösestufe beabsichtigte Übergang einer gelartigen Lösung, wie sie in der ersten Lösestufe anfällt, zu einer echten Lösung, ist mit relativ kurzer Verweilzeit gewährleistet, wenn die Temperatur in der zweiten Lösestufe 150-170 °C beträgt.

Nichtlöser im Sinne der Erfindung sind solche Flüssigkeiten, in denen sich das Copolymere nicht löst und die mit dem Lösungsmittel γ-Butyrolacton in jedem Verhältnis mischbar sind.

Hierzu gehören beispielsweise niedrigsiedende Ketone und Milchsäureäthylester.

Ein bevorzugter Nichtlöser ist Wasser, welches hervorragend geeignet ist.

Andere bevorzugte Nichtlöser sind Alkohole, unter denen insbesondere Äthylalkohol bevorzugt wird, weil bei diesem Toxizität durch verbliebene Reste an Alkohol nicht befürchtet werden muß, wohingegen diese Gefahr bei Methylalkohol nicht auszuschließen ist.

Die Nichtlöser können Zusätze enthalten, wie beispielsweise Salze und andere Elektrolyte, Glyzerin, γ-Butyrolacton und ähnliches.

Wasch- und Behandlungsbäder sind solche, die als wesentlichen Bestandteil einen Nichtlöser enthalten. Im allgemeinen wird die Membran in einem letzten Behandlungsbad mit einer wäßrigen oder alkoholischen Glyzerinlösung behandelt. Die Glyzerinlösung kann aber auch vorteilhaft aufgesprüht oder aufgedruckt werden.

Wesentlich für das Trocknen der Membran ist, daß dieses unter Schrumpfbehinderung in den Längs- und Querabmessungen geschieht. Das bedeutet, daß beim Trocknen von Flach- und Schlauchfolien der Flächeninhalt der Oberfläche der Membran sich nicht ändert, sondern nur die Dicke der Membran. Beim Trocknen von Hohlfäden ändern sich Innendurchmesser und Länge nicht, weil dieses durch die hohlraumbildende Flüssigkeit und die Fadenspannung beim Durchlaufen eines Trockners verhindert wird.

Flachfolien werden vorzugsweise auf einem im Trockner umlaufenden Band getrocknet.

Schrumpfbehinderung läßt sich dadurch erreichen, daß die Folie seitlich an dem Band befestigt wird, beispielsweise durch Klemmvorrichtungen. Eine besonders günstige Form der Schrumpfbehinderung ergibt sich dadurch, daß die Schrumpfbehinderung durch Adhäsion der Membranfolie auf dem Band erreicht wird. Die Membranfolie wird durch die Adhäsion so fest auf der gesamten Fläche des Bandes gehalten, daß sie nicht in Längsrichtung und in Querrichtung schrumpfen kann. Nach dem Trocknen läßt sie sich in einfacher Weise vom Band abheben.

Maßgeblich für die Wirksamkeit ist das Material, aus dem das Band gefertigt wurde und die Oberflächenbeschaffenheit des Bandes. Gut bewährt hat sich ein Band aus einer Polyäthylenterephthalatfolie.

Die Erfindung wird anhand der nachfolgenden Beispiele näher erläutert :

In einem beheizbaren 40 l-Behälter mit Rührwerk werden bei etwa Raumtemperatur unter schnellem Rühren zu 15,55 kg γ-Butyrolacton 2,325 kg eines Polycarbonat-Polyäther-Copolymers gegeben, das Bisphenol-A und Polyäthylenglykol eines mittleren Molekulargewichts von 10 000 im Gewichtsverhältnis 90 % : 10 %, berechnet als Carbonateinheiten, enthält und eine Intrinsicviskosität von 200 aufweist, so daß die Konzentration 13 % beträgt. Es wird auf 100-110 °C erwärmt, wobei eine noch gelige Lösung entsteht. Die Lösung wird im Vakuum entlüftet und mittels zweier Zahnradpumpen, von denen je eine als Druck- bzw. Meßpumpe arbeitet, zur Homogenisierung einem dynamischen Mischer zugeführt. Anschließend wird die Lösung in einer beheizbaren Rohrleitung mit Doppelmantel auf etwa 160 °C aufgeheizt, wobei eine klare, gelfreie Lösung entsteht. In die Rohrleitung sind zur besseren Wärmeübertragung statische Mischorgane eingebaut. Die Verweilzeit in dieser Heizzone betrug 7 Minuten. Die heiße Lösung gelangt anschließend zu einer Filtereinheit und wird dort über Gewebelagen filtriert. Anschließend wird in einer Kühlzone auf Temperaturen unter + 50 °C gekühlt und in-line über 2 μm Metallgewebefilter feinfiltriert. Die klare, entlüftete und filtrierte Gießlösung, die eine kinematische Zähigkeit von 92,5 Pa.s bei 20 °C aufweist, gelangt anschließend zu einer Schlitzdüse von 50 cm Schlitzbreite, deren Spalt auf 120 μm eingestellt wird.

Durch Fällen in Wasser von Raumtemperatur wird eine Membran von etwa 40 μm Naßdicke gebildet, die im Transmissionselektronenmikroskop selbst bei einer Vergrößerung von 80 000 : 1 über die Dicke in der Struktur keine signifikanten Strukturunterschiede aufweist und deshalb als isotrop bezeichnet werden kann. Damit soll weiterhin zum Ausdruck gebracht werden, daß die so gebildeten Membranen in ihren dialytischen und ultrafiltrierenden Eigenschaften nicht durch eine Art « Haut » auf den Oberflächen bestimmt werden, sondern durch die gesamte Fällstruktur. In einer Waschstrecke werden die so erhaltenen Membranen von γ-Butyrolacton bis unter die Nachweisgrenze im Gaschromatographen gewaschen und anschließend in den trockenen Zustand überführt.

Im allgemeinen erfolgt die Trocknung in der nachfolgend beschriebenen Weise.

Die von der Herstellung noch nassen Membranen werden durch ein Bad von 25 °C geführt, das beispielsweise 35 % Glycerin, 10 % Wasser und 55 % Äthylalkohol enthält. Die Verweilzeit beträgt etwa 1 Minute. Die Membran wird nach dem Verlassen des Bades durch ein Walzenpaar geführt, um eine definierte Abstreifung der Membranoberfläche zu gewährleisten und anschließend auf die Oberfläche eines in einem Trockenkanal umlaufenden dichten Bandes aufgelegt, das so beschaffen sein muß, daß die Membran während des gesamten Trocknungsprozesses fest auf der Unterlage haftet und weder in der Längs- noch in der Querrichtung schrumpfen kann.

Ein Trocknungsprozeß ohne diese Schrumpfbehinderung führt immer zu einer drastischen Verringerung der Leistungsdaten der Membran. Nach dem Trocknen muß die Membran leicht von der Bandunterlage ablösbar sein. Als Bandmaterial wurde eine Polyäthylenterephthalatfolie (erhältlich unter dem Warenzeichen Melinex^R) verwendet. Hier können aber auch andere Folien, beispielsweise auch Metallfolien mit einer definierten Rauhtiefe verwendet werden.

Abhängig von der Polymerzusammensetzung kann die nasse Membran auch unmittelbar, ohne daß sie zunächst durch ein Bad aus Glyzerin, Wasser und Äthylalkohol geführt wurde, in sonst gleicher Weise getrocknet werden. Es muß dabei nicht befürchtet werden, daß die Entfernung des Wassers aus dem Membranmaterial zu einem Kollabieren desselben führt, und die Leistungsdaten der Membranen stark negativ beeinträchtigt werden.

Entscheidend für die Wahl des Prozesses ist die Zusammensetzung des Polymeren, das für die Membranherstellung verwendet wird, und zwar ist die zuletzt beschriebene Art der Trocknung möglich bei solchen Polycarbonat-Polyäther-Copolymeren aus 7 bis 13 Gew.-% wiederkehrenden Polyäthylenoxidcarbonateinheiten und 93 bis 87 Gew.-% wiederkehrenden Bisphenol-A-Carbonateinheiten, bei denen die Polyäthylenoxidblöcke ein mittleres Molekulargewicht von 6 000 bis 10 000 haben.

Die getrockneten erfindungsgemäßen Membranen werden anschließend durch Bestrahlung mit γ-Strahlen, z. B. aus einer Co-60-Strahlungsquelle sterilisiert. Überraschend hat sich gezeigt, daß nach einer Bestrahlung mit 2,5 Mrad die Reißfestigkeit in Längsrichtung um etwa 50 % von etwa 800 cN auf über 1 200 cN und die Dehnung des Membranmaterials von 100 % auf 430-500 % also auf das etwa 4- bis 5-fache angestiegen war. Gemessen wurde an Proben von 100 mm Länge mit einer Einspannbreite von 15 mm mit 500 mm/min Dehnungsgeschwindigkeit unter Verwendung eines Zwickgerätes.

In den nachfolgenden Tabellen sind Ergebnisse von Messungen an verschiedenen erfindungsgemäßen Membranen zusammengestellt.

Tabelle I zeigt die Abhängigkeit der UFI von der Polymerzusammensetzung und verschiedenen Einflußgrößen bei der Membranherstellung.

Tabelle II zeigt die Meßergebnisse einiger dieser Membranen (a) nach unmittelbarer Trocknung bei 60 °C und 3 min Verweilzeit im Trockner ohne vorherige Nachbehandlung.

Tabelle III zeigt Meßergebnisse von in Tabelle I aufgeführten Membranen nach Trocknung mit vorangegangener Nachbehandlung. Verweilzeit im Trockner ebenfalls jeweils 3 mm.

Anhand von Messungen der dialytischen Permeabilität für Inulin ($\overline{MG}$ = 5 200) und Cytochrom C (MG 13 500) wurde festgestellt, daß die Ausschlußgrenze der erfindungsgemäßen Membranen bei einem Molekulargewicht von etwa 10 000 liegt.

### Tabelle 1

| lfd. Nr. | BPA-Carb. : PEG-Carb. Gewichtsverhältnis | $\overline{Mw}$ PEG Molgew. | Membrandicke (naß) [μm] | Intrinsic-Viskosität [ml/g] | Konzentr. Polym. Lsg. [Gew.-%] | UFL · $10^3$ (naß) [ml/min · kp] |
|---|---|---|---|---|---|---|
| 1 | 90 : 10 | 3 000 | 23 | 200 | 16 | 24 |
| 2 | 80 : 20 | 3 000 | 11 | 198 | 13 | 30 |
| 3 | 80 : 20 | 6 000 | 21 | 205 | 16 | 21 |
| 4 | 85 : 15 | 6 000 | 30 | 180 | 19 | 23 |
| 5 | 85 : 15 | 6 000 | 33 | 205 | 13 | 25 |
| 6 | 90 : 10 | 6 000 | 17 | 183 | 16 | 65 |
| 7 | 92 : 8 | 6 000 | 38 | 183 | 13 | 25 |
| 8 | 80 : 20 | 10 000 | 23 | 211 | 16 | 28 |
| 9 | 85 : 15 | 10 000 | 31 | 202 | 13 | 42 |
| 10 | 90 : 10 | 10 000 | 47 | 181 | 13 | 127 |
| 11 | 92 : 8 | 10 000 | 35 | 183 | 13 | 48 |
| 12 | 80 : 20 | 20 000 | 23 | 206 | 16 | 50 |
| 13 | 90 : 10 | 20 000 | 41 | 190 | 13 | 135 |
| 14 | 90 : 10 | 10 000 | 35 | 197 | 13 | 95 |
| 15 | 85 : 15 | 10 000 | 39 | 208 | 13 | 45 |

BPA-Carb. = Bisphenol-A-Carbonat
PEG-Carb. = Polyäthylenglykolcarbonat
PEG = Polyäthylenglykol

$\overline{Mw}$ = mittleres Molekulargewicht (Gewichtsmittel)

### Tabelle II

| lfd. Nr. | Membrandicke (trocken) [μm] | UFL · $10^3$ (trocken) [ml/min · kp] | $DL_{B12}$ · $10^3$ (trockene Membran) [cm/min] |
|---|---|---|---|
| 7a | 23 | 16,9 | 6,3 |
| 10a | 19 | 26,0 | 6,5 |
| 11a | 21 | 39,7 | 6,9 |
| 13a | 20 | 61,9 | 8,1 |
| 14a | 21 | 22,9 | 5,9 |

a = Ohne Nachbehandlung getrocknet.

## 0 024 600

### Tabelle III

| lfd. Nr. | Membrandicke (trocken) [$\mu$m] | UFL $\cdot 10^3$ (trocken) [ml/min $\cdot$ kp] | $DL_{B12} \cdot 10^3$ (trockene Membran) [cm/min] |
|---|---|---|---|
| 5b | 24 | 7,2 | 5,6 |
| 10b | 20 | 71,1 | 13,0 |
| 15b | 18 | 12,1 | 8,7 |
| 15c | 19 | 19,9 | 11,7 |

b = Nachbehandlung mit Glyzerin/Wasser/Aethanol im Verhältnis 35 % : 10 % : 55 % bei einer Badtemperatur von 25 °C vor dem Trocknen. Trocknertemperatur 60 °C.

c = Nachbehandlung mit Glyzerin/Wasser/Aethanol im Verhältnis 41 % : 9 % : 50 % bei einer Badtemperatur von 25 °C vor dem Trocknen. Trocknertemperatur 50 °C.

## Ansprüche

1. Membran in Form einer Flachfolie, Schlauchfolie oder eines Hohlfadens aus einem Polycarbonat-Polyäther-Blockcopolymeren mit 5 bis 35 Gew.-% wiederkehrenden Alkylenäthercarbonateinheiten in Polyäthylenoxidblöcken mit einem mittleren Molekulargewicht von mehr als 1 000 und 95 bis 65 Gew.-% wiederkehrenden Bisphenol-A-Carbonateinheiten, dadurch gekennzeichnet, daß das mittlere Molekulargewicht der Polyäthylenoxidblöcke 1 000 bis 20 000 beträgt, die Struktur der Membran isotrop und hautfrei ausgebildet ist ; die Intrinsic-Viskosität des Copolymeren 180 bis 300 ml/g (gemessen in Chloroform bei 25 °C) und die Ultrafiltrationsrate 4 bis 200 ml/h $\cdot$ m$^2 \cdot$ mm Hg betragen ; und die Membran hergestellt ist durch Extrusion einer Lösung des Polycarbonat-Polyäther-Blockcopolymeren in $\gamma$-Butyrolacton in einen Nichtlöser.

2. Membran nach Anspruch 1, dadurch gekennzeichnet, daß zahlenmäßig die dialytische Permeabilität für Vitamin B 12 (gemessen bei 20 °C) in Abhängigkeit von der Ultrafiltrationsleistung jeweils $DL_{B12} = (2,5 \pm 0,25) \sqrt{UFL}$ beträgt.

3. Membran nach Anspruch 1, dadurch gekennzeichnet, daß das Polycarbonat-Polyäther-Copolymere aus 7 bis 13 Gew.-% wiederkehrenden Polyäthylenoxidcarbonateinheiten und 93 bis 87 Gew.-% wiederkehrenden Bisphenol-A-Carbonateinheiten aufgebaut ist und das mittlere Molekulargewicht der Polyäthylenoxidblöcke 6 000 bis 10 000 beträgt.

4. Membran nach Anspruch 3, dadurch gekennzeichnet, daß ihr Gehalt an Hilfs- und Fremdstoffen weniger als 0,5 Gew.-% beträgt.

5. Membran nach Anspruch 4, dadurch gekennzeichnet, daß zahlenmäßig die dialytische Permeabilität für Vitamin B 12 (gemessen bei 20 °C) in Abhängigkeit von der Ultrafiltrationsleistung jeweils $DL_{B12} = (1,3 \pm 0,2) \sqrt{UFL}$ beträgt.

6. Verfahren zur Herstellung der Membran nach den Ansprüchen 1 bis 5, dadurch gekennzeichnet, daß man bei einer Temperatur von 80 bis 120 °C in einer ersten Lösestufe ein Polycarbonat-Polyäther-blockcopolymeres mit $\gamma$-Butyrolacton homogen vermischt, anschließend in einer zweiten Lösestufe bei 140 bis 180 °C in weniger als 10 Minuten in eine echte Lösung überführt und nach Filtration auf 20 bis 50 °C abkühlt, daß man diese Lösung durch eine Düse in ein Bad, das einen Nichtlöser für das Polymere enthält, zu einer Schlauchfolie, Flachfolie oder einem Hohlfaden extrudiert und mit Hilfe von Wasch- und Behandlungsbädern diese bis zur Nachweisgrenze lösungsmittelfrei wäscht und unter Schrumpfbehinderung in den Längs- und Querabmessungen trocknet.

7. Verfahren nach Anspruch 6, dadurch gekennzeichnet, daß Polycarbonat-Polyäther-Blockcopolymer und $\gamma$-Butyrolacton im Gewichtsverhältnis 10 : 90 bis 20 : 80 gemischt werden.

8. Verfahren nach den Ansprüchen 6 bis 7, dadurch gekennzeichnet, daß die Temperatur in der ersten Lösestufe 100 bis 110 °C beträgt.

9. Verfahren nach den Ansprüchen 6 bis 8, dadurch gekennzeichnet, daß die Temperatur in der zweiten Lösestufe 150-170 °C beträgt.

10. Verfahren nach den Ansprüchen 6 bis 9, dadurch gekennzeichnet, daß man als Nichtlöser Wasser einsetzt.

11. Verfahren nach den Ansprüchen 6 bis 9, dadurch gekennzeichnet, daß man als Nichtlöser Alkohole einsetzt.

12. Verfahren nach den Ansprüchen 6 bis 11, dadurch gekennzeichnet, daß der Nichtlöser Zusätze enthält.

13. Verfahren nach den Ansprüchen 6 bis 12, dadurch gekennzeichnet, daß man zur Herstellung einer Flachfolienmembran, die nasse, lösungsmittelfrei gewaschene Folie auf einem im Trockner umlaufenden Band trocknet.

6

14. Verfahren nach Anspruch 13, dadurch gekennzeichnet, daß die Schrumpfbehinderung durch seitliches Befestigen der Folie auf dem Band erreicht wird.

15. Verfahren nach Anspruch 13, dadurch gekennzeichnet, daß die Schrumpfbehinderung durch Adhäsion der Membranfolie auf dem Band erreicht wird.

16. Verfahren nach Anspruch 15, dadurch gekennzeichnet, daß das Band aus einer Polyäthylenterephthalatfolie besteht.

17. Verwendung der Membran nach den Ansprüchen 1 bis 16 für die Hämodialyse.

18. Verwendung der Membran nach den Ansprüchen 1 bis 16 für die Hämofiltration.

## Claims

1. A membrane in the form of a flat film, a tubular film or a hollow filament consisting of a polycarbonate-polyether block copolymer having from 5 to 35 %, by weight, of recurring alkylene ether carbonate units in polyethylene oxide blocks having an average molecular weight of more than 1 000, and from 95 to 65 %, by weight, of recurring bisphenol-A-carbonate units, characterised in that the average molecular weight of the polyethylene oxide blocks is from 1 000 to 20 000, the structure of the membrane is isotropic and skin-free, the intrinsic viscosity of the copolymer is from 180 to 300 ml/g (measured in chloroform at 25 °C) and the ultrafiltration rate is from 4 to 200 ml/h · m$^2$ · mm Hg, and the membrane is produced by the extrusion of a solution of the polycarbonate-polyether block copolymer in γ-butyrolactone in a non-solvent.

2. A membrane according to claim 1, characterised in that the dialytic permeability for vitamin B 12 (measured at 20 °C), depending on the ultrafiltration capacity is numerically in each case $DL_{B12} = (2.5 \pm 0.25) \sqrt{UFL}$.

3. A membrane according to claim 1, characterised in that the polycarbonate-polyether copolymer is composed of from 7 to 13 %, by weight, of recurring polyethylene oxide carbonate units and from 93 to 87 %, by weight, of recurring bisphenol-A-carbonate units, and the average molecular weight of the polyethylene oxide blocks is from 6 000 to 10 000.

4. A membrane according to claim 3, characterised in that it contains less than 0.5 %, by weight, of auxiliaries and foreign substances.

5. A membrane according to claim 4, characterised in that the dialytic permeability for vitamin B 12 (measured at 20 °C), depending on the ultrafiltration capacity is numerically in each case $DL_{B12} = (1.3 \pm 0.2) \sqrt{UFL}$.

6. A process for the production of the membrane according to claims 1 to 5, characterised in that, in a first dissolution stage, a polycarbonate-polyether block copolymer is mixed homogeneously with γ-butyrolactone at a temperature of from 80 to 120 °C, then, in a second dissolution stage, the mixture is converted into a true solution at from 140 to 180 °C in less than 10 minutes and, after filtration, is cooled to from 20 to 50 °C, this solution is extruded through a nozzle into a bath which contains a non-solvent for the polymer to produce a tubular film, a flat film or a hollow filament, and this is washed until it is free of solvent up to the detection limit using washing and treatment baths and is dried while inhibiting shrinkage in the longitudinal and transverse dimensions.

7. A process according to claim 6, characterised in that polycarbonate-polyether block copolymer and γ-butyrolactone are mixed in a weight ratio of from 10 : 90 to 20 : 80.

8. A process according to claims 6 to 7, characterised in that the temperature in the first dissolution stage is from 100 to 110 °C.

9. A process according to claims 6 to 8, characterised in that the temperature in the second dissolution stage is from 150 to 170 °C.

10. A process according to claims 6 to 9, characterised in that water is used as non-solvent.

11. A process according to claims 6 to 9, characterised in that alcohols are used as non-solvent.

12. A process according to claims 6 to 11, characterised in that the non-solvent contains additives.

13. A process according to claims 6 to 12, characterised in that, for the production of a flat film membrane, the wet film which is washed free of solvent is dried on a belt revolving in a drier.

14. A process according to claim 13, characterised in that the shrinkage inhibition is achieved by attaching the film by its sides to the belt.

15. A process according to claim 13, characterised in that the shrinkage inhibition is achieved by adhesion of the membrane film to the belt.

16. A process according to claim 15, characterised in that the belt is made of a polyethylene terephthalate film.

17. The use of the membrane according to claims 1 to 16 for haemodialysis.

18. The use of the membrane according to claims 1 to 16 for haemofiltration.

## Revendications

1. Membrane sous forme d'une feuille plate, d'une feuille tubulaire ou d'un fil creux en un

7

copolymère séquencé polycarbonate-polyéther ayant 5 à 35 % en poids de motif unitaire alkylène-éther-carbonate se répétant dans les séquences polyéthylène-oxyde avec un poids moléculaire moyen supérieur à 1 000, et 95 à 65 % en poids de motif unitaire bisphénol-A-carbonate se répétant, caractérisée par le fait que le poids moléculaire moyen des séquences polyéthylène-oxyde est de 1 000 à 20 000, que la structure de la membrane est conçue isotrope et sans peau, que la viscosité intrinsèque du copolymère est de 180 à 300 ml/g (mesurée dans le chloroforme à 25 °C) et que le débit d'ultrafiltration est de 4 à 200 ml/h · m$^2$ · mm de mercure ; et que la membrane est fabriquée par extrusion dans un non-solvant d'une solution du copolymère séquencé polycarbonate-polyéther dans la γ-butyrolactone.

2. Membrane selon la revendication 1, caractérisée par le fait que numériquement, la perméabilité dialytique pour la vitamine B 12 (mesurée à 20 °C) en fonction de la capacité d'ultra-filtration est à chaque fois $DL_{B12} = (2,5 \pm 0,25) \sqrt{UFL}$.

3. Membrane selon la revendication 1, caractérisée par le fait que le copolymère polycarbonate-polyéther est constitué par 7 à 13 % en poids de motif unitaire polyéthylène-oxyde-carbonate se répétant, et par 93 à 87 % en poids de motif unitaire bisphénol-A-carbonate se répétant, et que le poids moléculaire moyen des séquences polyéthylène-oxyde est de 6 000 à 10 000.

4. Membrane selon la revendication 3, caractérisée par le fait que sa teneur en matières auxiliaires et en matières étrangères est inférieure à 0,5 % en poids.

5. Membrane selon la revendication 4, caractérisée par le fait que numériquement, la perméabilité dialytique pour la vitamine B 12 (mesurée à 20 °C) en fonction de la capacité d'ultra-filtration est à chaque fois $DL_{B12} = (1,3 \pm 0,2) \sqrt{UFL}$.

6. Procédé pour la fabrication de la membrane selon les revendications 1 à 5, caractérisé par le fait qu'à une température de 80 à 120 °C, dans un premier stade de dissolution, on mélange d'une façon homogène un copolymère séquencé polycarbonate-polyéther avec la γ-butyrolactone, puis que dans un deuxième stade de dissolution à 140-180 °C, en moins de 10 minutes, on transforme ce mélange en une vraie solution, puis qu'on refroidit à 20-50 °C après filtration, qu'on extrude cette solution en une feuille tubulaire, une feuille plate ou en un fil creux, à travers une filière dans un bain qui contient un non-solvant pour le polymère, et qu'on débarrasse l'extrudat de ce solvant jusqu'au seuil de détection à l'aide de bain de lavage et de traitement, et qu'on sèche tout en empêchant le retrait dans les dimensions longitudinales et transversales.

7. Procédé selon la revendication 6, caractérisé par le fait que le copolymère séquencé polycarbonate-polyéther et la γ-butyrolactone sont mélangés dans un rapport pondéral de 10 : 90 à 20 : 80.

8. Procédé selon les revendications 6 et 7, caractérisé par le fait que la température dans le premier stade de dissolution est de 100 à 110 °C.

9. Procédé selon les revendications 6 à 8, caractérisé par le fait que la température dans le deuxième stade de dissolution est de 150 à 170 °C.

10. Procédé selon les revendications 6 à 9, caractérisé par le fait qu'on utilise l'eau comme non-solvant.

11. Procédé selon les revendications 6 à 9, caractérisé par le fait qu'on utilise des alcools comme non-solvant.

12. Procédé selon les revendications 6 à 11, caractérisé par le fait que le non-solvant contient des additifs.

13. Procédé selon les revendications 6 à 12, caractérisé par le fait que pour la fabrication d'une membrane en feuille plate, on fait sécher la feuille humide, lavée, débarrassée du solvant, sur une bande circulant dans le séchoir.

14. Procédé selon la revendication 13, caractérisé par le fait qu'on parvient à éviter le retrait par une fixation latérale de la feuille sur la bande.

15. Procédé selon la revendication 13, caractérisé par le fait qu'on parvient à éviter le retrait par collage de la feuille formant la membrane sur la bande.

16. Procédé selon la revendication 15, caractérisé par le fait que la bande est constituée par une feuille de polyéthylène-téréphtalate.

17. Utilisation de la membrane selon les revendications 1 à 16 pour l'hémodialyse.

18. Utilisation de la membrane selon les revendications 1 à 16 pour l'hémofiltration.